# EUROPEAN PATENT APPLICATION

(11) **EP 4 353 633 A1**
(43) Date of publication of application: **17.04.2024**
(21) Application number: 22201087.8
(22) Date of filing: 12.10.2022
(51) Int. Cl.: B65G 1/127, B60R 9/06

(54) **CAROUSEL SHELF FOR A DELIVERY VEHICLE**

(71) Applicant: B-ON GmbH, 52070 Aachen (DE)
(72) Inventor: Serjeant, Roland, 50676 Köln (DE)
(74) Representative: Michalski Hüttermann & Partner Patentanwälte mbB

(57) **Abstract**

The invention is directed to a carousel shelf (10) for a delivery vehicle, wherein the shelf comprises a plurality of compartments (12), two rotational centers, each rotational center connected to the plurality of compartments (12) for circulating the compartments (12) around a connection axis of the two rotational centers and along a circular route (16), wherein the shelf (10) is configured such that a distance (18) between the compartments (12) and the connection axis is variable along the circular route (16) of the shelf (10).

Furthermore, the invention is directed to a container for a delivery vehicle comprising the above shelf (10), wherein the connection axis extends along a longitudinal axis of the container.

Also, the invention is directed to a method for determining a control signal for controlling a drive motor (24) of the above shelf (10).

## Description

The invention relates to a carousel shelf for a delivery vehicle.

Furthermore, the invention relates to a container for a delivery vehicle comprising the above shelf and to a delivery vehicle comprising the above shelf or said container.

Further, the invention relates to a method for determining a control signal for controlling a drive motor of the shelf.

### Background of the invention

With electronic commerce the amount of goods delivered has steadily increased. The increasing flow of goods in the sector of home delivery where the goods are directly delivered to the individual customers calls for optimization concepts with regard to the distribution process itself, for example to reduce the associated traffic and emissions. However, the overall process is still inefficient, which means that large distribution periods, i.e. many vehicles and drivers, are required.

The document WO 2019/037921 A1 describes a carousel for a vehicle, a vehicle with such a carousel and a method for operating the vehicle. The carousel comprises a basic frame and a plurality of shelf compartment elements which are held on the basic frame. The carousel further comprises a circulating storage device, by means of which a particular shelf compartment element is movable to at least one removal position relative to the basic frame.

However, the mechanism of the shelf carousel makes the carousel move slowly such that filling of the shelf compartment elements with goods and objects as well as extracting the objects from the shelf compartment elements takes up a long time, which makes the delivery process inefficient. Furthermore, the mechanism is heavy which in turn has a negative effect on the delivery vehicle's fuel and/or energy consumption.

### Description of the invention

Proceeding from this situation, it is an object of the invention to provide means to improve the efficiency of the delivery process and/or decrease the fuel and/or energy consumption of the delivery vehicle.

The object is achieved by the features of the independent claims. Advantageous embodiments are specified in the dependent claims.

Accordingly, the object is achieved by a carousel shelf for a delivery vehicle, wherein the shelf comprises a plurality of compartments, two rotational centers, each rotational center connected to the plurality of compartments for circulating the compartments around a connection axis of the two rotational centers and along a circular route, wherein the shelf is configured such that a distance between the compartments and the connection axis is variable along the circular route of the shelf.

Furthermore, the object is achieved by a container for a delivery vehicle comprising a shelf according to any of the preceding claims, wherein the connection axis extends along a longitudinal axis of the container.

Also, the object is achieved by a delivery vehicle comprising the above shelf or comprising the above container.

Furthermore, the object is achieved by a method for determining a control signal for controlling a drive motor of a shelf, and preferably of the above-described shelf, comprising the steps
- receiving a current location signal providing information about a current location,
- receiving an object storage location signal providing information about a location of an object within the shelf,
- receiving an object delivery location signal providing information about a delivery location of the object, and
- determining the control signal such that a position of the compartments on the circular route enables access to the object when the current location signal corresponds to the good delivery location signal of said object.

One aspect of the invention is, that the shelf comprises the two rotational centers each connected to the plurality of compartments for circulating the compartments around the connection axis and along the circular route. In other words, the drive for the movement of the compartments along the circular route is provided by the two rotational centers and the connection axis forms the axis of rotation around which the compartments move. Furthermore, the connection axis is not necessarily a physical component of the shelf, but can be a virtual connecting line between the two rotational centers defining the axis of rotation of the shelf. Preferably, each compartment is connected to each rotational center by a connection element for transferring the torque. Alternatively, it is possible that the rotational center is connected to a circular belt or chain that extends along the circular route and to which the compartments are connected.

By having the two rotational centers with the connection axis as center of the circular route the construction of the shelf is simplified. Thus, the mechanical construction of the shelf is lightweight which decreases the fuel and/or energy consumption of the delivery vehicle. Furthermore, the construction of the shelf allows a fast movement of the compartments along the circular route, which allows for an efficient delivery process.

A further aspect of the invention is that the shelf is configured such that the distance between the compartments and the connection axis is variable along the circular route. This allows to adapt the circular route of the shelf to the specific form of the container and/or the delivery vehicle. Hence, the volume utilization of the container and/or the delivery vehicle is improved.

In the context of this application, circular route does not only mean a route that has the form of a circle. Instead, the circular route can in principle have any form, as long as it is a closed loop, i.e. a path whose initial point is equal to its terminal point.

Preferably, the compartments are configured to accommodate objects, such as goods, that need to be delivered to the customer. The shelf can have different amounts of compartments, depending on the size of the compartments and the volume of the container and/or vehicle. The compartments preferably have essentially a rectangular cuboidal shape, preferably comprising at least a bottom and two opposing sidewalls each connected to the bottom.

According to a preferred embodiment of the invention, the shelf comprise a rotational shaft and the two rotational centers are formed by two opposite ends of the rotational shaft. In other words, in this preferred embodiment the rotational shaft as physical component is used as connection axis between the two rotational centers. This has the advantage that only one rotational center needs to be driven by a drive motor for moving the compartments along the circular route. In other words, the rotation of the shaft is preferably directly used for affecting the movement of the compartments along the circular route. Further preferably the motion of the rotational shaft is preferably not used to drive a drive system that extends along the circular route of the compartments. In other words, the shelf is preferably free of a drive system that extends along the circular route of the shelf. Preferably the shelf comprises just one rotational shaft around which the compartments move along the circular route. This makes the shelf less complex. Furthermore, and as the rotational shaft is preferably connected to the compartments on both sides of the compartments the motion of the compartments along the circular route is precise.

According to a preferred embodiment of the invention, the shelf comprises a plurality of telescopic guides for connecting the compartments to the rotational center, wherein the compartments are connected to the telescopic guides such that the compartments are rotatable with respect to the telescopic guides. In other words, the connection element between the rotational center and the compartments is preferably configured as telescopic guide. This allows to adapt the distance between the compartment and the connection axis by linearly extending or decreasing the length of the telescopic guide. Further preferably every compartment is connected to at least one rotational center by a telescopic guide. Even more preferably every compartment is connected to both rotational centers by a telescopic guide on each side of the compartment. This provides a defined motion of the compartment around the connection axis. In other words, this also means that preferably every compartment is connected to the rotational shaft by a telescopic guide, and further that every compartment is connected to the rotational shaft by a telescopic guide on each side of the compartment. The connection of the telescopic guide to the rotational center / rotational shaft is preferably rigid. Thus, when rotating the rotational center, the telescopic guide moves around the connection axis in a rotational manner. The connection of the telescopic guide to the compartment preferably allows a rotation of the compartment around an axis parallel to the connection axis. In other words, the compartments are allowed to rotate with respect to the telescopic guide. In order to achieve this, the connection between the telescopic guide and the compartment is preferably configured as joint. Further preferably the sidewall of the compartment is connected to the telescopic guide by a connection mechanism. The rotation of the compartment with respect to the telescopic guide and around the axis parallel to the rotational shaft has the advantage that while the compartments move along the circular route, the compartments can be kept upright - comparable to gondolas in a Ferris wheel.

According to a preferred embodiment of the invention, the shelf comprises one or more drive motors for rotating the rotational center. In case the shelf does not comprise the shaft, the shelf preferably comprises two communicationally connected drive motors. In other words, in this case preferably each rotational center is connected to a drive motor for effecting the rotation of the rotational center. In case the shelf comprises the rotational shaft, it is preferred that the shelf comprises one drive motor for rotating the rotational shaft. It is possible that the drive motor is configured as direct drive and is located directly at the rotational center or rotational shaft. However, according to another preferred embodiment of the invention, the shelf comprises a drive motor for rotating the rotational center and a propulsion transmission system connecting a prime mover output shaft of the drive motor to the rotational center. In order to move the compartments along the circular route, the rotational centers are rotated around the connection axis. This motion is preferably effected by the drive motor of the shelf. The propulsion transmission system connecting the prime mover output shaft of the drive motor to the rotational center is preferably configured as belt and pulley system, as chain drive, or as a transmission geared drive to the rotational center. This allows to reduce or increase the speed of the prime mover output shaft to the required speed needed for moving the compartments along the circular route, thereby increasing or reducing torque in the process.

According to another preferred embodiment of the invention, a shelf is provided comprising a support structure, wherein the two rotational centers are mounted in the support structure or wherein the rotational shaft is mounted in the support structure. Particular preferably the support structure comprises at least two frame parts that are parallel to each other. Further preferably each frame part is used to mount one rotational center and/or the rotational shaft is mounted between the two frame parts, such that the circular route of the compartments lies within a plane parallel to the plane of the frame parts. Further preferably the shelf is configured such that the sidewalls of the compartments are parallel to the frame parts. In other words, the compartments preferably extend between the two frame parts parallel to the connection axis and move around the connection axis.

In connection to this and according to another preferred embodiment of the invention, the shelf comprises a track guide for guiding the compartments along the circular route. The track guide is preferably provided by the support structure. Particular preferably the frame parts each comprise the track guide that extends along the circular route. Further preferably the compartments each comprise track alignment rollers for interacting with the track guide. This allows that the compartments are on each side flanked by the frame structure.

According to another preferred embodiment of the invention, the shelf comprises an alignment track for providing a rotation of the compartment around an axis parallel to the connection axis, when moving the compartments along the circular route. In other words, the alignment track also provides a rotation of the compartment with respect to an axis connecting the compartments with the rotational center when moving the compartments along the circular route. In order to avoid that a bottom of the compartment is at one point of the circular route upside down when moving the compartments along the circular route, the connection between the telescopic guide and the compartment allows a rotation of the compartment with respect to the telescopic guide around the axis parallel to the connection axis. The alignment track, which is preferably provided by the support structure and particularly preferably provided by each frame part, forces by interaction with the compartments the rotation of the compartment with respect to the telescopic guide while circulating the compartments around the connection axis. Further preferably the compartments comprise rollers for interacting with the alignment track.

With regard to the compartments the compartments are preferably configured to accommodate objects, such as goods. Besides the bottom and the two opposing sidewalls, the compartment can preferably also comprise a rear wall connecting the two sidewalls. The compartment may have a front wall opposite to the rear wall or may be free of a front wall. It is possible that the compartments are for example configured as basket trays. Further preferably it is possible that the compartment comprises partitioning walls, dividing the compartment along the extent of the rotational shaft in multiple subcompartments. Further preferably it is also possible that the compartment is partitioned along a direction perpendicular to the extent of the rotational shaft, for example into a lower and an upper subcompartment. In this regard and in order to simplify the extraction of the objects out of the compartments and according to a preferred embodiment of the invention the compartment comprises a drawer slide mechanism to pull a storage tray out of the compartment. The compartments can accommodate only one storage tray, or multiple storage trays.

It is further possible that the subcompartments can be detached from the compartments to (pre)fill the subcompartments with objects. In this regard and according to another preferred embodiment of the invention, a shelf is provided wherein the compartment comprises several detachable subcompartments and wherein each subcompartment comprises a RFID tag or microchip for storing information about the objects in the subcompartment. Further preferably the compartment comprises RFID readers for reading the tags. This allows to preload the subcompartments with objects outside of the compartment and store the information about the objects within the subcompartments in the RFID tag of the subcompartment. When the subcompartments are attached to the compartments of the shelf the information about the objects is preferably transmitted to a control unit of the shelf.

According to another preferred embodiment of the invention, the shelf comprises a housing with a closable access opening. Further preferably an access door is used for closing the access opening. The access door can be configured for manual operation or it can be configured for automated operation. Furthermore, the access opening and/or the access door can be configured such that it gives access to the whole compartment in particular to the whole length of the compartment along the axis parallel to the connection axis. Alternatively, the access opening and/or the access door can be configured such that it gives partial access to the compartment in particular with respect to the length of the compartment along the axis parallel to the connection axis. In case the access opening and/or the access door are configured to only give partial access to the compartment, it is preferred that the access opening and/or the access door are also configured to provide an alterable access to different regions of the compartment. This can for example be achieved by multiple access doors, wherein each access door provides access to a specific region of the compartment, or alternatively by a sliding access door, that can create the access opening at different locations along the axis parallel to the connection axis. Having an access opening and/or access door that is configured such that it gives partial access to the compartment has the advantage that extraction of the objects from the shelf may be facilitated, as the access opening indicates the location of the object within the compartment. It is further possible, that the housing comprises multiple access openings and multiple access doors arranged such that the compartments of the shelf are located in between the access openings and/or access doors. For example, the housing may comprise two access openings opposite to each other and arranged such that the compartments are in between the two access openings. This allows access to the compartments from both sides of the connection axis.

In order to provide an efficient delivery system, it is preferable that the shelf comprises a scanner, such that objects extracted from the shelf or objects filled into the shelf can be scanned. In this regard a shelf may be provided wherein every compartment and/or every subcompartment comprises a scanner. This has the advantage that when the object is filled into the compartment and/or subcompartment and/or when the object is extracted from the compartment and/or subcompartment it is automatically scanned and a databank providing a record of the objects within the shelf, the compartments and/or the subcompartments can be updated.

In connection to this and according to another preferred embodiment the shelf comprises a scanner movable along the axis parallel to connection axis. Preferably the shelf comprises one scanner, which is movable along the axis parallel to the connection axis. This allows to reduce the number of scanners, which makes the shelf less expensive. Particular preferably the scanner is movable along the access opening of the housing. This allows to indicated the location of the object within the shelf by the position of the movable scanner.

Independent of having one scanner, or several scanners, or a movable scanner, or a stationary scanner, it is further preferred that the scanner is not only configured to scan the object, but also configured to provide an indicator signal. Preferably the scanner comprises a lamp for providing an optical indicator signal and/or a speaker for providing an acoustic indicator signal. This facilitates filling the shelf with objects and/or extracting objects from the shelf, as the scanner can indicate the location of the object by the optical indicator signal or communicate the location of the object to the user via the acoustic indicator signal.

According to another preferred embodiment of the invention, the shelf comprises a control unit configured to control the drive motor based on a control signal. Hence, the control unit indirectly effects the movement of the compartments along the circular route, as it generates the control signal for the drive motor. Preferably the control unit is configured to send the control signal to the drive motor. Further preferably the control unit is configured to control the movable scanner of the shelf based on a second control signal and is further configured to send the second control signal to the movable scanner. Further preferably the control unit is configured to control the indictor signaling - i.e. the optic or acoustic indictor signal - of the scanner based on a third control signal and is further configured to send the third control signal to the scanner.

The control unit is further preferably configured to receive a current location signal of the shelf and/or to receive an object related signal from the scanner. The control unit may be configured to access and/or update a databank where information about the location of the individual objects in the shelf and/or compartments and/or subcompartments is stored. The control unit may be configured as chip or microchip. The control unit may be located near the shelf and/or on the shelf. Alternatively, it is also possible that the control unit is located somewhere else and is configured to wirelessly transmits the control signal to the drive motor and/or the scanner. For example, the control unit may be server based. Further preferably the shelf may comprise a location sensor, such as a GPS sensor for determining the current location signal.

According to another preferred embodiment of the invention, the shelf comprises a proximity sensor, a door closing sensor and/or a pinch protection sensor communicationally connected to the control unit. In particular it is preferred that the control unit is configured to receive a safety related signal from the proximity sensor, an access door closing sensor and/or a pinch protection sensor. Further preferably the control unit is configured to stop moving the compartments along the circular route based on the safety related signal from the proximity sensor and/or the pinch protection sensor. Further preferably the control unit is configured to only start moving the compartments along the circular route based on the safety related signal from the access door closing sensor. These sensors all improve the safety of the user as they prevent that a body part of the user gets stuck in the shelf.

Further technical features and advantages of the shelf for the delivery vehicle are directly and unambiguously derived by the person skilled in the art from the container for the delivery vehicle and/or from the delivery vehicle as described below. Further advantages and technical features of the shelf are also directly and unambiguously derivable by the person skilled in the art from the description of method for determining the control signal for controlling the drive motor of the shelf.

As already mentioned, the invention is also directed to the container for the delivery vehicle comprising the shelf, wherein the shelf comprises the plurality of compartments two rotational centers, each rotational center connected to the plurality of compartments for circulating the compartments around the connection axis of the two rotational centers and along the circular route, wherein the shelf is configured such that a distance between the compartments and the connection axis is variable along the circular route of the shelf and wherein the connection axis extends along the longitudinal axis of the container.

The longitudinal axis of the container is preferably parallel to a driving direction of the delivery vehicle. Thus, this configuration of the connection axis within the container has the advantage that access to the compartments can be provided from the side of the vehicle. Access to the objects from the side of the vehicle as compared to the back of the vehicle has the advantage that the access area is larger. Furthermore, the delivery is safer, as the access area can be accessed from the sidewalk of the road.

According to a further preferred embodiment of the invention, the circular route of the shelf corresponds at least in part to an inner boundary defined by the exterior walls of the container. Particular preferably the circular route is such that the compartments move close to the inner boundary of the container. Moving close to the inner boundary of the container preferably means that the distance between the compartment and the inner boundary is less than or equal to 50 cm, more preferably less than or equal to 30 cm, and even more preferably less than or equal to 15 cm. This has the advantage that the access to the compartments is facilitated, as essentially no gap between the exterior walls and the compartment is present. Further preferably the circular route of the shelf corresponds at least in part to an inner boundary defined by the exterior walls of the container.

The circular route can essentially have any form. However, preferably the form of the circular route matches the form defined by the exterior walls of the container. For example, in case the exterior walls of the container define a rectangle, the form of the circular route is preferably a rectangle and further preferably a rectangle with rounded corners. For example, in case the container comprises wheel houses for wheels of the delivery vehicle, the exterior walls of the container may have the form of a rectangle, where the two lower corners are negative corners. In this case, the circular route may also have the form of a rectangle, where the two lower corners are negative corners. Matching the form defined by the exterior walls of the container helps to increase the volume utilization of the container.

According to another embodiment of the invention, a container is provided wherein the support structure of the shelf and/or a housing of the shelf is provided by exterior walls of the container. In other words, in this embodiment, the shelf is integrated in the container. This has the advantage that as the walls of the container form the support structure and/or the housing of the shelf, the volume utilization of the container is improved.

Furthermore, it may also be possible that the housing of the shelf is provided by the container and in particular by the exterior walls of the container. Alternatively, the shelf may comprise a housing in addition to the exterior walls of the container. In this regard and according to another preferred embodiment of the invention, the container comprises a door in an exterior wall of the container, such that the door is provided in a plane parallel to a plane of the connection axis and/or wherein an access door of the shelf is provided by the container. In connection to this it may also be possible that the movable scanner moves along the opening of the door of the container.

As already mentioned, the invention also relates to the delivery vehicle comprising the above-described shelf or comprising the above-described container. Further preferable the delivery vehicle comprises a location sensor configured to generate a current location signal, and wherein the location sensor is configured to send the current location signal to the control unit of the shelf. In other words, it is preferred that the location sensor, such as a GPS sensor of the vehicle is communicationally connected to the control unit of the shelf. Hence, the current location of the vehicle can be sent to the control unit.

According to another preferred embodiment of the invention, an access door of the shelf is provided by the container or the delivery vehicle, such that the access door of the shelf is on the side of the vehicle adjacent to the sidewalk. This increases the safety of the user of the delivery vehicle, as extraction of the objects from the shelf can be done from the sidewalk, when the vehicle stops alongside the road.

As already mentioned, the invention also relates to the method for determining the control signal for controlling the drive motor of the shelf, comprising the steps
- receiving the current location signal providing information about the current location,
- receiving the object storage location signal providing information about the location of the object within the shelf,
- receiving the object delivery location signal providing information about the delivery location of the object, and
- determining the control signal such that the position of the compartments on the circular route enables access to the object when the current location signal corresponds to the object delivery location signal of said object.

The method is preferably performed by the control unit of the shelf. Thus, and in other words, the control unit is preferably configured to perform the above method. Furthermore, enabling access to the object preferably means that the position of the compartment where the object is stored corresponds to a position of the access opening of the housing of the shelf and/or to the position of the access opening of the exterior walls of the container. The good storage location signal preferably comprises information about the compartment of the shelf in which the object is stored and/or information about the position of the object within the compartment - for example information about the position of the object along the axis parallel to the rotational shaft and/or information about the position of the object with respect to subcompartments of the shelf.

The object delivery location signal is preferably a signal that contains information about the delivery location for the object, such as a delivery address. Furthermore, the term "the current location signal corresponds to the object delivery location signal" preferably means in the context of the invention, that the current location signal indicates a location that matches the delivery location of the object, within some predetermined margins such as 20 meters or 30 meters.

Further preferably the step of receiving the object storage location signal and/or receiving the object delivery location signal comprises accessing the databank providing a record of the location of the object within the shelf and the delivery location of the object. The databank can be stored in the control unit itself or can be stored elsewhere, e.g. on a server. In the latter case the control unit preferably communicates with the entity where the databank is stored to access and/or update the databank.

According to a preferred embodiment of the invention, the method comprises the step of scanning the object while filling the compartment with the object and/or while extracting the object from the compartment and updating the databank providing a record of the location of the object within the shelf. This is an easy way to updated the databank.

With regard to the scanner and according to another preferred embodiments of the invention, the shelf comprises the movable scanner and the method comprises the step of determining a second control signal such that a position of the movable scanner along the connection axis corresponds to the location of the object along the connection axis within the shelf when the current location signal corresponds to the object delivery location signal of said object. Preferably the second control signal for controlling the movable scanner is determined such that the position of the movable scanner enables scanning of the object by extracting the object from the compartment when the current location signal corresponds to the object delivery location signal of said object. Enabling scanning of the object by extracting the object from the compartment preferably means that the position of the scanner along the axis parallel to the connection axis corresponds to the position of object along the axis parallel to the connection axis. This helps to increase the speed when extracting the object from the compartments during delivery as the scanner is directly next to the object that needs to be extracted. Furthermore, the position of the scanner also helps to identify the location of the object within the compartment. In other words, it is preferred that the position of the movable scanner is used to indicate the location of the object along the connection axis. This makes finding the object in the shelf easier for the user.

According to another preferred embodiment of the invention it is also possible that the second control signal for controlling the movable scanner is determined by taking an optical or acoustic command instruction of the user into account. In other words, it is preferred that the scanner can be moved by a hand gesture or an acoustic command of the user to a specific position along the axis parallel to the connection axis. This makes scanning the objects while filling the compartments with objects faster.

In this regard and according to another preferred embodiment of the invention, the shelf comprises a plurality of scanners and preferably for each compartment and even more preferably for each subcompartment at least one scanner, and the method comprises the steps of determining a third control signal, such that the scanner of the plurality of scanners that is closest to the object within the shelf generates an optical and/or acoustic indicator signal when the current location signal corresponds to the object delivery location signal of said object. This is also a way to make finding of the object in the shelf easier for the user.

According to another preferred embodiment of the invention, the method comprises the steps of
- scanning the object while extracting the object from the compartment,
- verifying that the object delivery location signal of the extracted object corresponds to the received current location signal, and
- determining a third control signal for generating an acoustic and/or optic indicator signal for the scanner such that the acoustic and/or optic indicator signal conveys the verification result.

In other words, the method preferably checks if the correct object is extracted from the shelf and indicates to the user of the shelf by the indicator signal if this is the case. Preferably the third control signal for generating the indicator signal for the scanner is determined by taking the outcome of the previous step into account. For example, in case the incorrect object was extracted from the shelf, the indicator signal can for example be a red light and/or an acoustic signal conveying the message to the user that the incorrect object was extracted. In case the correct object was extracted from the shelf, the indicator signal can for example be a green light and/or an acoustic signal conveying the message to the user that the correct object was extracted.

Further preferably the method comprises the step of determining the current location signal by a location sensor, preferably a GPS sensor, and sending the current location signal to the control unit. The location sensor can be provided by the shelf itself allowing to track the location of the shelf or it can be provided by an existing GPS sensor of the vehicle comprising the shelf.

According to another preferred embodiment of the invention, the compartments comprise several sub compartments and wherein each sub compartment comprises an RFID tag for storing information about the objects in the subcompartment and wherein the compartment comprises RFID readers for reading the tags, and the step of receiving the object storage location signal providing information about the location of the object within the shelf, comprises transmitting several subcompartment related object storage location signals providing information about the objects within the subcompartment to the control unit.

### Short description of the drawings

The invention will be explained in more detail below with reference to the attached drawings by way of preferred embodiments.

In the drawings:
- Fig. 1: shows a schematic illustration of a carousel shelf for a delivery vehicle, according to a preferred embodiment of the invention,
- Fig. 2: shows a schematic illustration of a compartment of the shelf of figure 1,
- Fig. 3: shows a schematic illustration of a carousel shelf for a delivery vehicle, according to another preferred embodiment of the invention,
- Fig. 4: shows a schematic illustration of a carousel shelf for a delivery vehicle, according to another preferred embodiment of the invention,
- Fig. 5: shows a magnified schematic illustration of compartments interacting with a track guide of the shelf of figure 3,
- Fig. 6: shows another magnified schematic illustration of the interacting with the track guide of the shelf of figure 3,
- Fig. 7: shows a schematic perspective illustration of the carousel shelf of figure 4,
- Fig. 8: shows a schematic illustration of compartments of a carousel shelf, according to a further preferred embodiment of the invention,
- Fig. 9: shows a schematic illustration of a carousel shelf for a delivery vehicle, according to another preferred embodiment of the invention, and
- Fig. 10: shows a schematic illustration of a carousel shelf for a delivery vehicle, according to another preferred embodiment of the invention.

### Detailed description of the embodiments

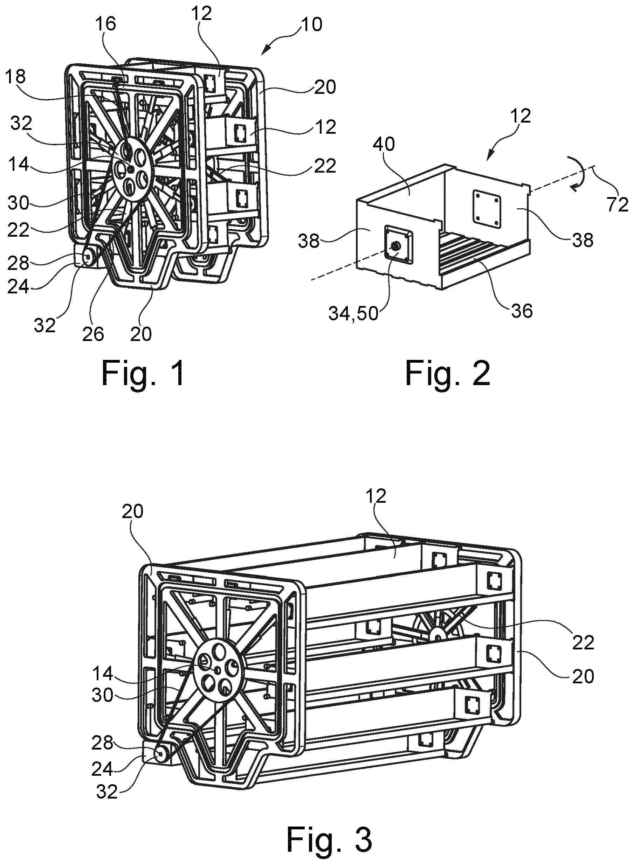

Figure 1 shows a schematic illustration of a preferred embodiment of a carousel shelf 10 for a delivery vehicle. The shelf 10 comprises a plurality of compartments 12, a rotational shaft 14 connected to the plurality of compartments 12 for circulating the compartments 12 around the shaft 14 along a circular route 16, wherein the shelf 10 is configured such that a distance 18 between the compartments 12 and the shaft 14 is variable along the circular route 16 of the shelf 10.

In this particular embodiment the shelf 10 comprises support structure 20 for mounting the shaft 14 in the support structure. The support structure comprises two frame parts 20 that are parallel to each other such that the compartments 12 and the shaft 14 are between the frame parts 20. Furthermore, for connecting the shaft 14 to the compartments 12, the shelf 10 comprises a plurality of telescopic guides 22. For rotating the shaft 14 the shelf 10 further comprises a drive motor 24 and a propulsion transmission system 26 connecting a prime mover output shaft 28 of the drive motor 24 to the rotational shaft 14 of the shelf. In this particular embodiment the propulsion transmission system 26 is configured as chain drive with a roller chain 30 and two sprocket-wheels 32. Furthermore, in this embodiment the circular route 16 has the form of a rectangle where the two lower corners are configured as interior corners. Furthermore, all corners are rounded corners. This form of the circular route 16 leaves at the interior corners the space for a wheel-house of the delivery vehicle.

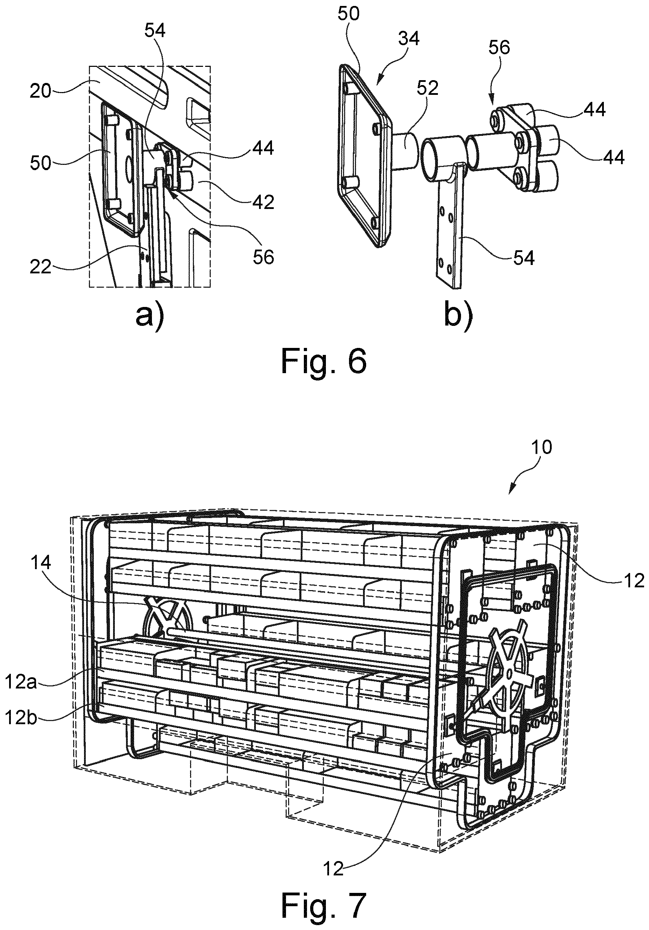

Figure 2 shows a schematic illustration of a compartment 12 of the shelf 10 of figure 1. A connection 34 of the compartments 12 to the telescopic guides 22 allows the compartments 12 to rotate with respect to the telescopic guides 22 (see also figure 6) around an axis 72 parallel to the rotational shaft 14. The compartments 12 have essentially a rectangular cuboidal shape, comprising a bottom 36, two opposing sidewalls 38 each connected to the bottom 36, and a rear wall 40 connecting the two sidewalls 38.

Figure 3 shows a schematic illustration of another preferred embodiment of a carousel shelf 10 for a delivery vehicle. The shelf 10 in figure 3 is similar to the shelf 10 shown in figure 1, however a distance between the two frame parts 10 of the support structure 20 is higher than in figure 1. Thus, also the rotational shaft 14 and the compartments 12 have a higher extent in this direction. The embodiments shown in figure 1 and 3 both have eight compartments 12.

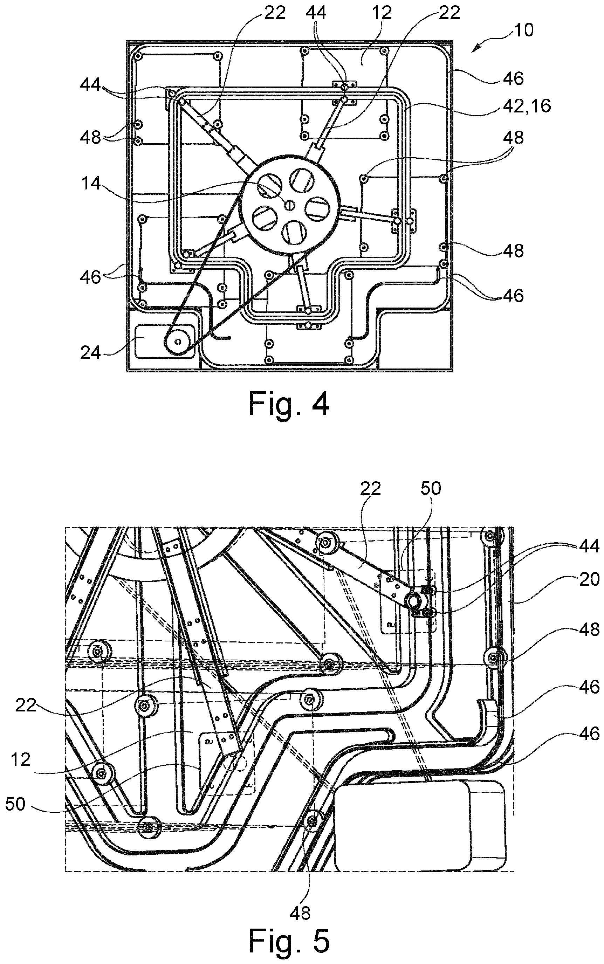

Figure 4 shows a schematic illustration of further preferred embodiment of the carousel shelf 10 for a delivery vehicle from the side. As is evident from figure 4, this embodiment of the shelf 10 comprises five compartments 12. Furthermore, as can be seen on figure 4, the shelf 10 comprises a track guide 42 for guiding the compartments 12 along the circular route 16. The track guide 42 is provided by the frame part 20. The compartments 12 comprise track alignment rollers 44 for interacting with the track guide 42. The frame part 20 further provide an alignment track 46 for effecting a rotation of the compartment 12 with respect to the axis of the telescopic guide 22. For interacting with the alignment track 46, the compartments 12 comprise rollers 48.

Figures 5 and 6 show magnified illustrations of how the compartments 12 of the shelf 10 of figure 3 interact with the track guide 42 and the alignment track 46. The connection 34 of compartments 12 to the telescopic guide 22 comprise an attachment tray 50, that is directly attached to the compartment 12 having an extension 52 for interacting with a main connection mechanism 54. The main connection mechanism 54 is connected to the telescopic guide 22 and to a roller cage 56 comprising the track alignment rollers 44 for interacting with the track guide 42.

Figure 7 shows a schematic perspective illustration of the carousel shelf 10 from figure 4. The compartments 12 in this embodiment are partitioned into a lower and an upper subcompartment 12a, 12b. Furthermore, the compartment 12 comprises a drawer slide mechanism to pull out the lower subcompartment 12b.

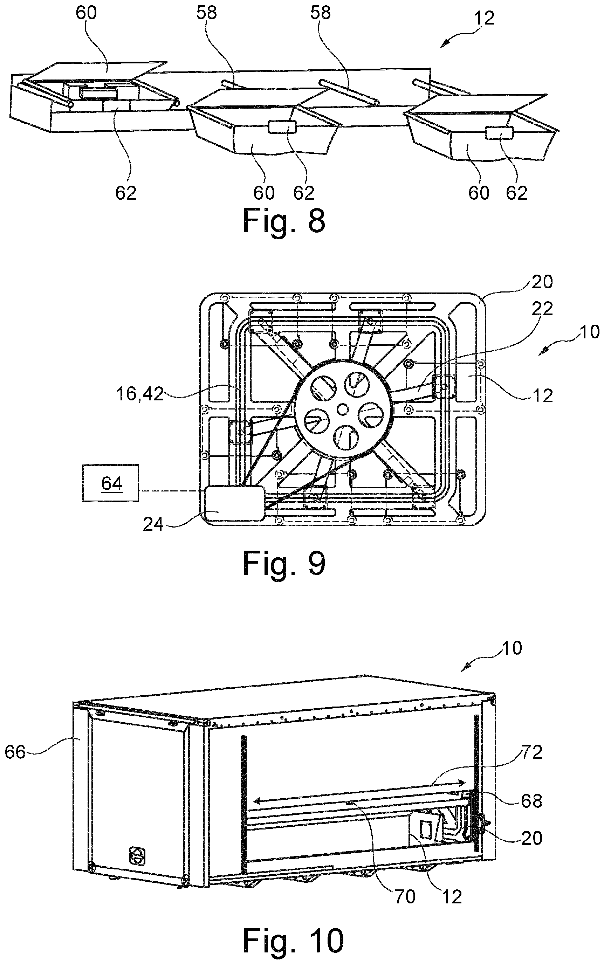

Figure 8 shows a schematic illustration of the compartment 12 of the carousel shelf 10 according to a further embodiment of the invention. In this embodiment the compartment 12 comprises poles 58 for interacting with flexible frame bags 60 wherein each frame bag 60 forms a subcompartment. Each frame bag 60 further comprises an RFID chip 62. The RFID chip 62 carries information about the content of the frame bag 62 and can transfer this information to a control unit 64 (not shown in figure 8) of the shelf 10.

Figure 9 shows a schematic illustration of a further preferred embodiment of the carousel shelf 10 for a delivery vehicle from the side. Compared to the embodiments shown in figures 1, 3, and 4, the embodiment of the shelf 10 shown in figure 9 comprises six compartments 12. Furthermore, in this embodiment the circular route 16 has the form of a rectangle with rounded edges. As can also be seen in figure 9, the shelf 10 comprises a control unit 64 that is telecommunicationally connected to the drive motor 24. The control unit 64 is configured to generate a control signal for the drive motor 24.

Figure 10 shows a schematic illustration of a further preferred embodiment of the carousel shelf 10 for a delivery vehicle. In this embodiment, the shelf 10 comprises a housing 66 with a closable access opening 68 for accessing the compartments 12. The further parts of the shelf 10 are configured the same as in the embodiment shown in figure 9. In particular the circular route 16 also has the form of a rectangle with rounded edges. As can further be seen in figure 10, in this embodiment the shelf 10 comprises a scanner 70. The scanner 70 is movable along an axis 72 parallel to the rotational shaft 14 of the shelf 10 along the access opening 68 of the housing 66.

While the invention has been illustrated and described in detail in the drawings and foregoing description, such illustration and description are to be considered illustrative or exemplary and not restrictive; the invention is not limited to the disclosed embodiments. Other variations to be disclosed embodiments can be understood and effected by those skilled in the art in practicing the claimed invention, from a study of the drawings, the disclosed, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

**List of reference signs**

| | |
|---|---|
| Carousel shelf | 10 |
| compartment | 12 |
| rotational shaft | 14 |
| circular route | 16 |
| distance | 18 |
| support structure, frame parts | 20 |
| telescopic guides | 22 |
| drive motor | 24 |
| propulsion transmission system | 26 |
| prime mover output shaft | 28 |
| roller chain | 30 |
| sprocket-wheels | 32 |
| connection | 34 |
| bottom | 36 |
| sidewall | 38 |
| rear wall | 40 |
| track guide | 42 |
| track alignment roller | 44 |
| alignment track | 46 |
| rollers | 48 |
| attachment tray | 50 |
| extension | 52 |
| main connection mechanism | 54 |
| roller cage | 56 |
| pole | 58 |
| flexible frame bag | 60 |
| RFID chip | 62 |
| Control unit | 64 |
| Housing | 66 |
| Access opening | 68 |
| Scanner | 70 |
| Axis parallel to shaft | 72 |

## Claims

1. Carousel shelf (10) for a delivery vehicle, wherein the shelf comprises a plurality of compartments (12), two rotational centers, each rotational center connected to the plurality of compartments (12) for circulating the compartments (12) around a connection axis of the two rotational centers and along a circular route (16), wherein the shelf (10) is configured such that a distance (18) between the compartments (12) and the connection axis is variable along the circular route (16) of the shelf (10).

2. Shelf (10) according to the preceding claim, comprising a rotational shaft (14), and wherein the two rotational centers are formed by two opposite ends of the rotational shaft (14).

3. Shelf (10) according to any of the preceding claims, comprising a plurality of telescopic guides (22) for connecting the compartments (12) to the rotational center, wherein the compartments (12) are connected to the telescopic guides (22) such that the compartments (12) are rotatable with respect to the telescopic guides (22).

4. Shelf (10) according to any of the preceding claims, comprising one or more drive motors (24) for rotating the rotational center and/or
comprising a support structure (20), wherein the two rotational centers are mounted in the support structure or wherein the rotational shaft (14) is mounted in the support structure (20).

5. Shelf (10) according to any of the preceding claims comprising a track guide (42) for guiding the compartments (12) along the circular route (16) and/or
comprises an alignment track (46) for providing a rotation of the compartment (12) around an axis (72) parallel to the connection axis, when moving the compartments (12) along the circular route (16).

6. Shelf (10) according to any of the preceding claims, wherein the compartment (12) comprises a drawer slide mechanism to pull a storage tray out of the compartment (12) and/or
wherein the compartments (12) comprise several detachable subcompartments (60) and wherein each subcompartment (60) comprises a RFID tag (62) or microchip for storing information about objects within the subcompartment (60).

7. Shelf (10) according to any of the preceding claims, wherein the shelf (10) comprises a scanner (70), wherein the scanner (70) is preferably movable along an axis (72) parallel to the connection axis, and/or
wherein the shelf (10) comprises a proximity sensor, a door closing sensor and/or a pinch protection sensor communicationally connected to the control unit (64).

8. Shelf (10) according to any of the preceding claims, wherein the shelf (10) comprises a control unit (64) configured to control the drive motor (24) based on a control signal.

9. Container for a delivery vehicle comprising a shelf (10) according to any of the preceding claims, wherein the connection axis extends along a longitudinal axis of the container.

10. Container according to the preceding claim, wherein the circular route (16) of the shelf (10) corresponds at least in part to an inner boundary defined by exterior walls of the container and/or
wherein a support structure (20) of the shelf (10) and/or a housing (66) of the shelf (10) is provided by exterior walls of the container.

11. Delivery vehicle comprising a shelf (10) according to any of the preceding shelf claims or comprising a container according to any of the preceding container claims.

12. Delivery vehicle according to the preceding claim, wherein the delivery vehicle comprises a location sensor configured to generate a current location signal, and wherein the location sensor is configured to send the current location signal to a control unit (64) of the shelf (10) and/or
wherein an access door of the shelf (10) is provided by the container or the delivery vehicle, such that the access door of the shelf (10) is on the side of the vehicle adjacent to the sidewalk

13. Method for determining a control signal for controlling a drive motor (24) of a shelf (10), and preferably of a shelf (10) according to any of the previous shelf claims, comprising the steps
- receiving a current location signal providing information about a current location,
- receiving an object storage location signal providing information about a location of an object within the shelf (10),
- receiving an object delivery location signal providing information about a delivery location of the object, and
- determining the control signal such that a position of the compartments (12) on the circular route (12) enables access to the object when the current location signal corresponds to the object delivery location signal of said object.

14. Method according to the previous method claim comprising the step of determining a second control signal such that a position of a movable scanner (70) of the shelf (10) along the connection axis corresponds to the location of the object along the connection axis within the shelf (10), when the current location signal corresponds to the object delivery location signal of said object.

15. Method according to any of the previous method claims, comprising the steps of
- scanning the object while extracting the object from the compartment (12),
- verifying that the object delivery location signal of the extracted object corresponds to the received current location signal, and
- determining a third control signal for generating an acoustic and/or optic indicator signal for the scanner (70) such that the acoustic and/or optic indicator signal conveys the verification result.
